(19) Europäisches Patentamt
European Patent Office
Office européen des brevets

(11) **EP 4 215 709 A1**

(12) **EUROPÄISCHE PATENTANMELDUNG**

(43) Veröffentlichungstag:
26.07.2023 Patentblatt 2023/30

(21) Anmeldenummer: 23152262.4

(22) Anmeldetag: 18.01.2023

(51) Internationale Patentklassifikation (IPC):
E06B 3/16 (2006.01)   E06B 3/263 (2006.01)
E06B 3/58 (2006.01)   E06B 3/62 (2006.01)
E06B 7/23 (2006.01)   F16J 15/00 (2006.01)

(52) Gemeinsame Patentklassifikation (CPC):
E06B 3/26303; E06B 3/16; E06B 3/2632;
E06B 3/5821; E06B 3/5828; E06B 3/62;
F16J 15/025; F16J 15/064; F16J 15/067;
E06B 2003/6208; E06B 2003/6211;
E06B 2003/6223; E06B 2003/6267

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(30) Priorität: **19.01.2022   DE 102022101202**

(71) Anmelder: **heroal- Johann Henkenjohann GmbH & Co. KG**
**33415 Verl (DE)**

(72) Erfinder:
• **Batzke, Daniel**
**32657 Lemgo (DE)**
• **Lechtermann, Markus**
**33378 Rheda-Wiedenbrück (DE)**

(74) Vertreter: **Cohausz & Florack**
**Patent- & Rechtsanwälte**
**Partnerschaftsgesellschaft mbB**
**Bleichstraße 14**
**40211 Düsseldorf (DE)**

(54) **DICHTLEISTE FÜR EINEN AUS EINZELNEN RAHMENPROFILEN ZUSAMMENGESETZTEN RAHMEN EINES FENSTERS, EINER TÜR ODER EINER FASSADE**

(57) Dargestellt und beschrieben ist eine Dichtleiste für einen aus einzelnen Rahmenprofilen (16, 17) zusammengesetzten Rahmen eines Fensters, einer Tür oder einer Fassade zur Anordnung zwischen einer Scheibe, insbesondere einer Glasscheibe (19, 20), und einer Glasleiste (21) oder zur Anordnung zwischen der Scheibe, insbesondere der Glasscheibe (19, 20), und dem Rahmenprofil (17), wobei die Dichtleiste (1, 1', 1", 1''') im Querschnitt einen Hauptabschnitt (2, 2', 2", 2''') und einen Adapterabschnitt (3, 3', 3", 3''') umfasst und wobei der Hauptabschnitt (2, 2', 2", 2''') und der Adapterabschnitt (3, 3', 3", 3''') zumindest im Ausgangszustand über eine erste Verbindung miteinander verbunden sind. Um eine Veränderung der Dichtstoffdicke vor Ort durchzuführen, ohne dass Abfall entsteht und um zu erreichen, dass zur Modifikation der Dichtstoffdicke keine weiteren Dichtelemente notwendig sind, die vorgehalten werden müssen, ist vorgesehen, dass der Hauptabschnitt (2, 2', 2", 2''') und der Adapterabschnitt (3, 3', 3", 3''') alternativ oder zusätzlich zur ersten Verbindung über eine zweite Verbindung miteinander verbindbar sind, wobei die Dichtstoffdicke der Dichtleiste (1, 1', 1", 1''') durch Bildung der zweiten Verbindung veränderbar ist.

Fig.1A

## Beschreibung

Die Erfindung betrifft eine Dichtleiste für einen aus einzelnen Rahmenprofilen zusammengesetzten Rahmen eines Fensters, einer Tür oder einer Fassade zur Anordnung zwischen einer Scheibe, insbesondere einer Glasscheibe, und einer Glasleiste oder zur Anordnung zwischen der Scheibe, insbesondere der Glasscheibe, und dem Rahmenprofil, wobei die Dichtleiste im Querschnitt einen Hauptabschnitt und einen Adapterabschnitt umfasst und wobei der Hauptabschnitt und der Adapterabschnitt zumindest im Ausgangszustand über eine erste Verbindung miteinander verbunden sind.

Rahmen von Fenstern, Türen oder Fassaden sind aus einzelnen inneren und äußeren Rahmenprofilen zusammengesetzt und sind dazu ausgebildet, eine Scheibe, insbesondere eine Glasscheibe, aufzunehmen. Die Glasscheiben können dabei auch mehrere Glasscheiben, insbesondere zwei oder drei Glasscheiben, die mit einem gewissen Abstand zueinander angeordnet sind, umfassen. Dabei spricht man von einer sogenannten 2-fach oder 3-fach Verglasung. Alternativ können auch andere Scheiben, wie beispielsweise Paneele aus einem beliebigen Material in dem Rahmen angeordnet werden. Die Scheibe wird dabei mit umlaufenden, innenseitig am Fenster, an der Tür oder an der Fassade angeordneten Glasleisten am Rahmen befestigt.

Zwischen der Scheibe und der Glasleiste sowie zwischen dem äußeren Rahmenprofil und der Scheibe ist jeweils eine Dichtleiste angeordnet, mit der die Scheibe in dem Rahmen lagesicher fixiert wird. Man spricht in diesem Zusammenhang auch von einer inneren und einer äußeren Dichtleiste. Neben der Fixierung der Scheibe im Rahmen verhindern die Dichtleisten, dass Flüssigkeit, Feuchtigkeit oder Staub in einen die Scheibe aufnehmenden Falz des Rahmenprofils eindringt.

Die Dichtleisten halten im eingebauten Zustand die Scheibe und die Glasleiste bzw. die Scheibe und das äußere Rahmenprofil auf Abstand. Dieser Abstand entspricht der sogenannten Dichtstoffdicke. Die Dichtstoffdicke ist also ein Maß für die Breite der Nut am Rahmenprofil, in welche die Dichtleisten am Fenster, an der Tür oder an der Fassade eingeführt und befestigt werden.

Für Verglasungen, insbesondere für 2-fach und 3-fach Verglasungen, gelten relativ große Toleranzbereiche für die Dicke der Verglasung. Beispielsweise hat eine 2-fach Verglasung, bei der beide Scheiben aus Floatglas bestehen, nach DIN EN 1279-1:2018-10 eine zulässige Toleranz von +/- 1,0 mm. Während der Montage von Fenstern, Türen oder Fassaden muss regelmäßig auf verschiedene Dichtleisten zurückgegriffen werden, um diese Dickenunterschiede auszugleichen. Der Dickenausgleich erfolgt üblicherweise über die innere Dichtleiste, die zwischen der Scheibe und der Glasleiste angeordnet ist. Alternativ ist es ebenfalls möglich, den Dickenausgleich über die äußere Dichtleiste, die zwischen der Scheibe und dem äußeren Rahmenprofil angeordnet ist, zu realisieren. Das Vorsehen einer Vielzahl von unterschiedlichen inneren oder äußeren Dichtleisten, die zum Dickenausgleich notwendig sind, geht jedenfalls mit einem hohen Aufwand einher.

Eine gattungsgemäße Dichtleiste, die sich dieser Problematik widmet, ist beispielsweise aus der DE 20 2010 015 534 U1 bekannt. Die dort beschriebene Dichtleiste weist im Querschnitt drei Abschnitte auf. Der erste Abschnitt ist dabei jeweils mit einem Abreißsteg mit dem zweiten und dritten Abschnitt verbunden. Durch Zerstörung der Abreißstege sind der zweite und dritte Abschnitt von dem ersten Abschnitt entfernbar. Die Dichtleiste lässt sich mit allen drei Abschnitten, nur mit zwei Abschnitten oder lediglich mit dem ersten Abschnitt an ein Rahmenprofil montieren. Je nachdem, mit welchen Abschnitten die Dichtleiste zum Einsatz kommt, weist sie eine unterschiedliche Dicke auf. Die Dichtstoffdicke dieser Dichtleiste lässt sich also durch Abreißen der einzelnen Abschnitte vor Ort reduzieren.

In der DE 20 2005 000 604 U1 ist eine Dichtleiste beschrieben, bei der an einer Anlagefläche ein entfernbarer Steg vorgesehen ist, der eine Nut der Dichtleiste verschließt. Durch Entfernen des Stegs wird die Nut freigelegt. In die freigelegte Nut kann eine Zusatzdichtleiste angeordnet werden, mit der ein Dickenausgleich realisiert werden kann.

Bei den vorbekannten Dichtleisten müssen zur Veränderung der Dichtstoffdicken einzelne Elemente der Dichtleiste entfernt und entsorgt werden. Die Entsorgung geht mit einem Aufwand einher. Darüber hinaus besteht die Gefahr, dass derartige Artikel nicht ordnungsgemäß entsorgt werden und in die Umwelt gelangen.

Der Erfindung liegt daher die Aufgabe zugrunde, die eingangs genannte und zuvor näher beschriebene Dichtleiste so auszugestalten und weiterzubilden, dass eine Veränderung der Dichtstoffdicke vor Ort erfolgen kann, ohne dass Abfall entsteht. Ferner ist es wünschenswert, dass zur Modifikation der Dichtstoffdicke keine weiteren Dichtelemente notwendig sind, die vorgehalten werden müssen.

Gelöst wird diese Aufgabe bei einer Dichtleiste nach dem Oberbegriff von Anspruch 1 dadurch, dass der Hauptabschnitt und der Adapterabschnitt alternativ oder zusätzlich zur ersten Verbindung über eine zweite Verbindung miteinander verbindbar sind, wobei eine Dichtstoffdicke der Dichtleiste durch Bildung der zweiten Verbindung veränderbar ist.

Bei Modifikation der Dichtstoffdicke der Dichtleiste fällt kein Abfall an, da zur Anpassung der Dichtstoffdicke keine Elemente von der Dichtleiste komplett entfernt werden müssen. Vielmehr wird der Adapterabschnitt durch Herstellen der zweiten Verbindung in eine andere Position gebracht und kann so die Dichtstoffdicke vergrößern oder verkleinern. Für die Veränderung der Dichtstoffdicke müssen keine separaten Elemente wie Zusatzdichtleisten vorgehalten werden, da der Adapterabschnitt im Ausgangszustand mit dem Hauptabschnitt verbunden ist. Die Dichtleiste lässt sich sowohl bei getrennter als auch bei gebildeter zweiter Verbindung mit dem Hauptabschnitt und dem Adapterabschnitt in den Rahmen montieren. Auf diese Weise können zwei unterschiedliche Dichtstoffdicken mit nur einer Dichtleiste realisiert werden, ohne dass Abfall bei Anpassung der Dichtstoffdicke entsteht oder weitere Dichtelemente notwendig sind.

Besonders bevorzugt ist die erste Verbindung als Gelenk ausgebildet. In diesem Fall sind der Adapterabschnitt und der Hauptabschnitt immer beweglich miteinander verbunden. Ein Verlieren des Adapterabschnitts wird so sicher verhindert. Bevorzugt ist das Gelenk ferner durch eine Materialschwächung des Dichtleistenprofils an einer gewünschten Stelle realisiert, so dass keine weiteren Bauteile zur Bildung des Gelenks notwendig sind. Die Dichtstoffdicke der Dichtleiste kann bei dieser Ausgestaltung durch Umfalten des Adapterabschnitts angepasst werden.

Alternativ kann die erste Verbindung als Abreißsteg ausgebildet sein. In diesem Fall kann der Adapterabschnitt durch Zerstörung des Abreißsteges vom Hauptabschnitt entfernt und anschließend durch die zweite Verbindung mit dem Hauptabschnitt wieder verbunden werden. Der Vorgang kann nicht rückgängig gemacht werden, so dass der Adapterabschnitt nach Zerstörung des Abreißsteges nicht mehr in den Ausgangszustand bringbar ist.

Vorteilhafterweise sind der Hauptabschnitt und der Adapterabschnitt zumindest im Ausgangszustand einstückig ausgebildet. Dies bringt den Vorteil mit sich, dass bei Fertigung der Dichtleiste keine Montageschritte notwendig sind. Der Ausgangszustand beschreibt in diesem Zusammenhang den Zustand der Dichtleiste, bevor die Dichtstoffdicke der Dichtleiste zum ersten Mal angepasst worden ist.

Alternativ zu den voranstehend beschriebenen Ausgestaltungsvarianten kann die erste Verbindung als formschlüssige Verbindung ausgebildet sein. Die formschlüssige Verbindung kann realisiert werden, indem am Adapterabschnitt, also im Querschnitt der Dichtleiste, ein Pilzkopf ausgebildet ist, der in eine am Hauptabschnitt vorgesehene Aufnahmenut angeordnet werden kann. Der Pilzkopf bildet dementsprechend an der Dichtleiste eine Pilzleiste. Die Aufnahmenut kann hierzu zumindest zwei elastische Schenkel aufweisen, bei denen jeweils ein Rastvorsprung vorgesehen ist. Am Pilzkopf des Adapterabschnitts können wenigstens zwei Rastflanken ausgebildet sein, die bei Positionierung des Pilzkopfes in die Aufnahmenut von den Rastvorsprüngen übergriffen werden und so fest in Position gehalten werden. Alternativ ist es auch möglich, an dem Adapterabschnitt eine entsprechende Aufnahmenut und an dem Hauptabschnitt einen entsprechenden Pilzkopf vorzusehen. Die formschlüssige Verbindung sollte so realisiert werden, dass die erste Verbindung zerstörungsfrei getrennt werden kann, um den Adapterabschnitt und den Hauptabschnitt über die zweite Verbindung herstellen zu können. Die Ausgestaltung der ersten Verbindung als formschlüssige Verbindung hat den Vorteil, dass der Adapterabschnitt auch nach Auflösen der ersten Verbindung wieder in den Ausgangszustand gebracht werden kann.

Besonders bevorzugt ist die zweite Verbindung als formschlüssige Verbindung ausgebildet. Zur Realisierung der zweiten Verbindung als formschlüssige Verbindung ist an dem Hauptabschnitt eine Aufnahmenut vorzusehen, in die ein am Adapterabschnitt ausgebildeter Pilzkopf positioniert werden kann. Die Aufnahmenut und der Pilzkopf sollten wie voranstehend in Bezug auf die erste Verbindung erläutert ausgebildet sein. Alternativ kann auch an dem Adapterabschnitt eine entsprechende Aufnahmenut ausgebildet sein, die mit einem am Hauptabschnitt ausgebildeten Pilzkopf in Eingriff gebracht werden kann, um die zweite Verbindung zu realisieren.

Sofern die erste und die zweite Verbindung als formschlüssige Verbindung realisiert werden, handelt es sich vorteilhafterweise bei dem am Adapterabschnitt ausgebildeten Pilzkopf zur Bildung der ersten Verbindung um denselben Pilzkopf, der auch zur Bildung der zweiten Verbindung genutzt wird. Auf diese Weise muss nur ein Pilzkopf am Adapterabschnitt vorgesehen werden. Alternativ kann auch eine Aufnahmenut am Adapterabschnitt vorgesehen sein, die mit zwei am Hauptabschnitt angeordneten Pilzköpfen jeweils in Eingriff gebracht werden kann, um den Adapterabschnitt entweder über die erste Verbindung oder über die zweite Verbindung mit dem Hauptabschnitt zu verbinden.

Sofern die zweite Verbindung als formschlüssige Verbindung durch eine an dem Hauptabschnitt angeordnete Aufnahmenut realisiert wird, ist es von Vorteil, wenn die Aufnahmenut im Ausgangszustand offen ausgebildet ist. In diesem Fall kann der am Adapterabschnitt vorgesehene Pilzkopf direkt in die Aufnahmenut positioniert werden, ohne dass weitere Prozessschritte, wie beispielsweise ein Entfernen eines die Nut verdeckenden Steges, erfolgen müssen.

Eine weitere Lehre der Erfindung sieht vor, dass für das Verhältnis aus Dichtstoffdicke der Dichtleiste bei gebildeter zweiter Verbindung $dd_{geb}$ und Dichtstoffdicke der Dichtleiste bei getrennter zweiter Verbindung $dd_{get}$ folgender Zusammenhang gilt:

$$1{,}1 \leq \frac{dd_{geb}}{dd_{get}} \leq 1{,}5$$

Besonders bevorzugt gilt für den Zusammenhang:

$$1{,}2 \leq \frac{dd_{geb}}{dd_{get}} \leq 1{,}4$$

Die Verhältnisse haben sich als besonders günstig erwiesen, um die Toleranzen im Verglasungsbereich auszugleichen. So kann eine entsprechende Dichtleiste beispielsweise eine Dichtstoffdicke im eingebauten Zustand bei getrennter zweiter Verbindung von 6 mm und bei geschlossener zweiter Verbindung von 8 mm oder auch bei getrennter zweiter Verbindung von 7 mm und bei geschlossener zweiter Verbindung von 9 mm realisieren.

Zur besseren Fixierung der Dichtleiste an der Glasleiste oder an dem Rahmenprofil hat es sich als zweckmäßig erwiesen, ein zusätzliches Verbindungselement am Hauptabschnitt vorzusehen. Dieses kann beispielsweise als Pilzkopf ausgebildet sein, der in eine Aufnahmenut an der Glasleiste oder in eine Aufnahmenut an dem Rahmenprofil positioniert werden kann.

Weiterhin ist bevorzugt ein zusätzliches Verbindungselement an dem Adapterabschnitt zur Verbindung mit der Glasleiste oder zur Verbindung mit dem Rahmenprofil vorgesehen. Diese Ausgestaltungsvariante ist insbesondere vorteilhaft, wenn die erste Verbindung gelenkig realisiert wird und der Adapterabschnitt bei getrennter zweiter Verbindung nicht vollständig fixiert ist. Mit dem zusätzlichen Verbindungselement kann der Adapterabschnitt auch bei getrennter zweiter Verbindung lagesicher fixiert werden.

Nachfolgend wird die Erfindung anhand einer lediglich Ausführungsbeispiele darstellenden Zeichnung näher erläutert. In der Zeichnung zeigen, jeweils schematisch im Querschnitt,

Fig. 1A    ein erstes Ausführungsbeispiel einer erfindungsgemäßen Dichtleiste bei einer getrennten zweiten Verbindung,

Fig. 1B    ein zweites Ausführungsbeispiel einer erfindungsgemäß vormontierten Dichtleiste bei einer getrennten zweiten Verbindung,

Fig. 1C    ein drittes Ausführungsbeispiel einer erfindungsgemäßen Dichtleiste bei einer getrennten zweiten Verbindung,

Fig. 1D    ein viertes Ausführungsbeispiel einer erfindungsgemäßen Dichtleiste bei einer getrennten zweiten Verbindung,

Fig. 2A    ein erstes Beispiel für einen Rahmen eines Fensters mit der Dichtleiste aus Fig. 1A bei einer getrennten zweiten Verbindung,

Fig. 2B    den Rahmen aus Fig. 2A mit der Dichtleiste aus Fig. 1A bei einer geschlossenen zweiten Verbindung,

Fig. 3A    ein zweites Beispiel für einen Rahmen eines Fensters mit der Dichtleiste aus Fig. 1B bei einer getrennten zweiten Verbindung,

Fig. 3B    den Rahmen aus Fig. 3A mit der Dichtleiste aus Fig. 1B bei einer geschlossenen zweiten Verbindung,

Fig. 4A    ein drittes Beispiel für einen Rahmen eines Fensters mit der Dichtleiste aus Fig. 1C bei einer getrennten zweiten Verbindung,

Fig. 4B    den Rahmen aus Fig. 4A mit der Dichtleiste aus Fig. 1C bei einer geschlossenen zweiten Verbindung,

Fig. 5A    ein viertes Beispiel für einen Rahmen eines Fensters mit der Dichtleiste aus Fig. 1D bei einer getrennten zweiten Verbindung und

Fig. 5B    den Rahmen aus Fig. 5A mit der Dichtleiste aus Fig. 1D bei einer geschlossenen zweiten Verbindung.

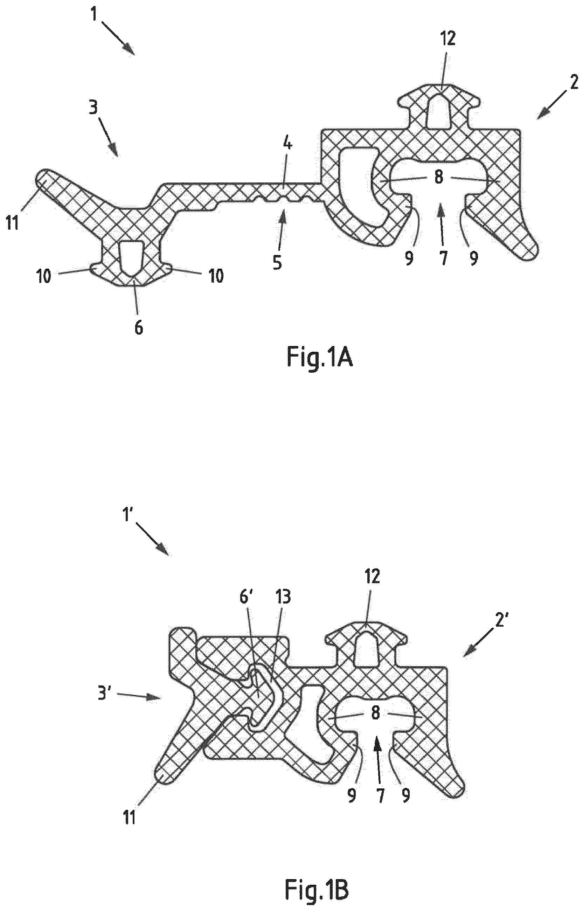

Fig. 1A zeigt ein erstes Ausführungsbeispiel für eine erfindungsgemäße Dichtleiste 1 mit einem Hauptabschnitt 2 und einem Adapterabschnitt 3 bei einer getrennten zweiten Verbindung im Querschnitt. Der Hauptabschnitt 2 und der Adapterabschnitt 3 sind über eine erste Verbindung beweglich miteinander verbunden. Die erste Verbindung ist als Gelenk 4 ausgebildet, indem in einem Abschnitt 5 der Dichtleiste 1 einseitig eine Materialschwächung vorgesehen ist. Die zweite Verbindung zwischen dem Hauptabschnitt 2 und dem Adapterabschnitt 3 ist als formschlüssige Verbindung ausgebildet und kann durch Umfalten des Adapterabschnitts 3 gebildet werden.

Zur Fixierung des umgefalteten Adapterabschnitts 3 ist ein an dem Adapterabschnitt 3 vorgesehener Pilzkopf 6 in eine an dem unteren Rand des Hauptabschnitts 2 vorgesehene Aufnahmenut 7 zu positionieren. Die Aufnahmenut 7 weist hierzu zwei elastische Schenkel 8 auf, an denen jeweils ein Rastvorsprung 9 ausgebildet ist. An dem Pilzkopf 6 sind zwei Rastflanken 10 vorgesehen. Sind der Hauptabschnitt 2 und der Adapterabschnitt 3 über die zweite Verbindung miteinander verbunden, übergreifen die Rastvorsprünge 9 die Rastflanken 10 und halten so den Pilzkopf 6 des Adapterabschnitts 3 sicher in der Aufnahmenut 7. An dem Adapterabschnitt 3 ist eine Lasche 11 vorgesehen, mit deren Hilfe der Pilzkopf 6 auch wieder leicht aus der Aufnahmenut 7 herausgezogen werden kann. An dem oberen Rand des Hauptabschnitts 2 ist ein zusätzliches Verbindungselement in Form eines Pilzkopfes 12 vorgesehen, der eine sichere Anbindung der Dichtleiste 1 an eine in Fig. 1A nicht dargestellte Glasleiste ermöglicht. Die Dichtleiste 1 ist in diesem Ausführungsbeispiel einstückig ausgebildet.

In Fig. 1B ist ein zweites Ausführungsbeispiel einer vormontierten, zweiteiligen Dichtleiste 1' bei einer getrennten zweiten Verbindung dargestellt. Die Dichtleiste 1' des zweiten Ausführungsbeispiels unterscheidet sich von der Dichtleiste 1 des ersten Ausführungsbeispiels insbesondere hinsichtlich der ersten Verbindung. Diese ist bei der Dichtleiste 1' als formschlüssige Verbindung ausgebildet. Hierzu ist an dem Adapterabschnitt 3' ein Pilzkopf 6' ausgebildet, der zur Bildung der ersten Verbindung in eine an dem seitlichen Rand des Hauptabschnitts 2' angeordnete Aufnahmenut 13 eingreift. Der Pilzkopf 6' kann mit Hilfe der Lasche 11 aus der Aufnahmenut 13 herausgezogen werden, so dass dieser in die zur Bildung der zweiten Verbindung vorgesehene, am unteren Rand des Hauptabschnitts 2' angeordnete Aufnahmenut 7 positioniert werden kann. Zur Bildung der ersten und der zweiten Verbindung wird bei diesem Ausführungsbeispiel derselbe am Adapterabschnitt 3' ausgebildete Pilzkopf 6' genutzt.

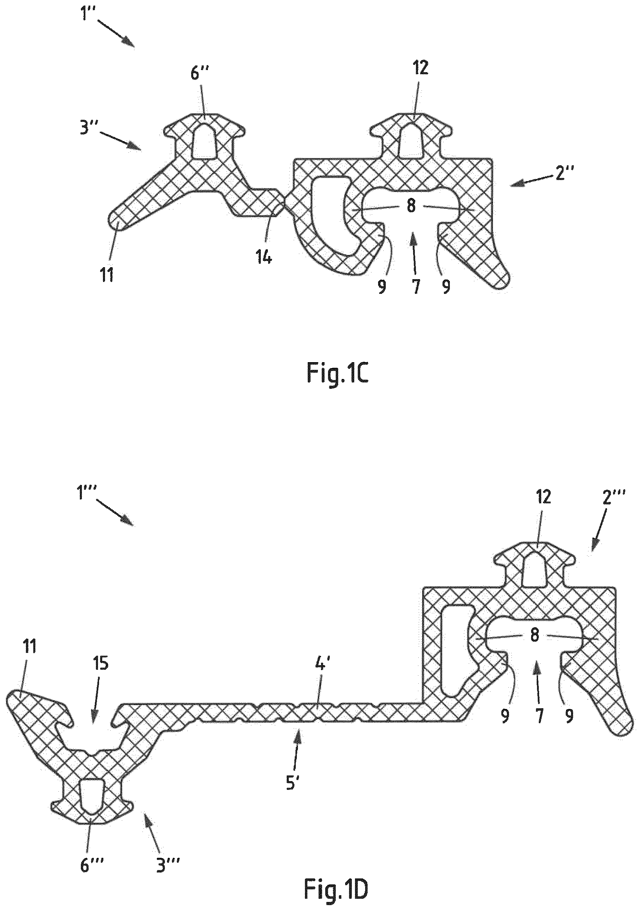

In dem in Fig. 1C dargestellten dritten Ausführungsbeispiel wird die erste Verbindung durch einen Abreißsteg 14 realisiert. Durch Zerstörung des Abreißsteges 14 kann der Adapterabschnitt 3" von dem Hauptabschnitt 2" getrennt werden. Anschließend kann der am Adapterabschnitt 3" ausgebildete Pilzkopf 6" in die am unteren Rand des Hauptabschnitts 2" vorgesehene Aufnahmenut 7 angeordnet werden, so dass der Hauptabschnitt 2" und der Adapterabschnitt 3" über die zweite Verbindung miteinander verbunden sind.

Das in Fig. 1D gezeigte vierte Ausführungsbeispiel entspricht im Wesentlichen dem ersten Ausführungsbeispiel aus Fig. 1A. Der Hauptabschnitt 2‴ und der Adapterabschnitt 3‴ sind über eine als Gelenk 4' ausgebildete erste Verbindung miteinander verbunden. Zur Realisierung des Gelenks 4' ist eine Materialschwächung sowohl an der Oberseite als auch an der Unterseite des das Gelenk 4' bildenden Abschnitts 5' vorgesehen, so dass der Adapterabschnitt 3‴ sowohl nach oben also auch nach unten umgefaltet werden kann. An dem Adapterabschnitt 3‴ ist ein Pilzkopf 6‴ ausgebildet, der zur Bildung der zweiten Verbindung in die am unteren Rand des Hauptabschnitts 2‴ ausgebildete Aufnahmenut 7 positioniert werden kann. Der Pilzkopf 6‴ und die Aufnahmenut 7 greifen zur Bildung der zweiten Verbindung wie im Zusammenhang des in Fig. 1A dargestellten ersten Ausführungsbeispiels erläutert, ineinander. An dem Adapterabschnitt 3‴ ist ein zusätzliches Verbindungselement in Form einer Aufnahmenut 15 vorgesehen. Diese Aufnahmenut 15 kann mit einem Pilzkopf, der an der hier nicht dargestellten Glasleiste befestigt ist, in Eingriff gebracht werden.

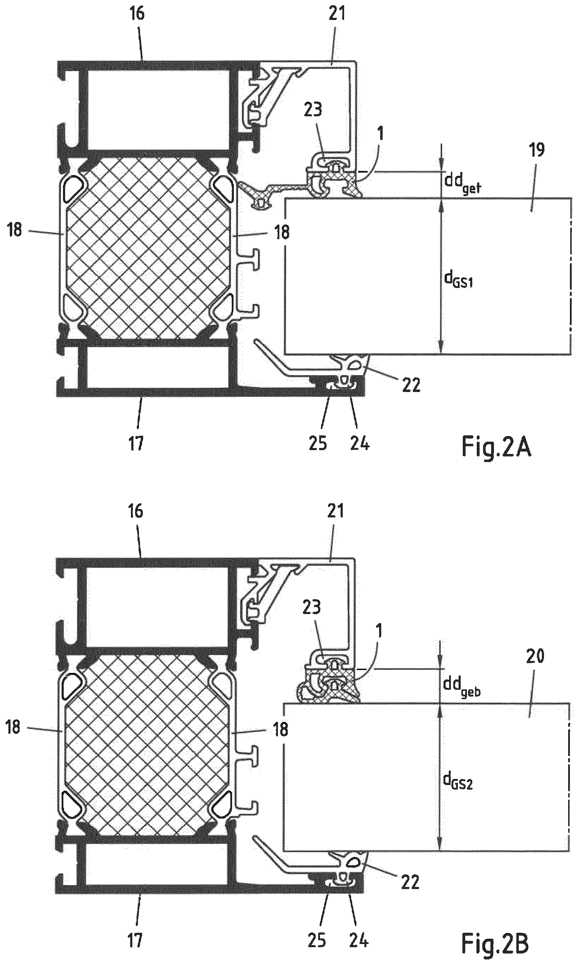

Das Ausführungsbeispiel der Fig. 2A und 2B zeigt einen Rahmen eines Fensters mit der zuvor beschriebenen Dichtleiste 1 im eingebauten Zustand. Der Rahmen umfasst ein inneres Rahmenprofil 16 und ein äußeres Rahmenprofil 17, die über Stege 18 miteinander verbunden sind. Eine Glasscheibe 19, 20 ist mit Hilfe einer Glasleiste 21 in dem Rahmen befestigt. Zur vollständigen Fixierung der Glasscheibe 19, 20 sind zwischen der Glasleiste 21 und der Glasscheibe 19, 20 die als innere Verglasungsdichtung fungierende Dichtleiste 1 und zwischen dem äußeren Rahmenprofil 17 und der Glasscheibe 19, 20 eine äußere Dichtleiste 22 angeordnet. Zur Fixierung der Dichtleiste 1 an der Glasleiste 21 ist an der Glasleiste 21 eine Aufnahmenut 23 ausgebildet, die mit dem am Hauptabschnitt 2 der Dichtleiste 1 vorgesehenen Pilzkopf 12 in Eingriff gebracht werden kann. Auch die äußere Dichtleiste 22 weist einen Pilzkopf 24 auf, der in eine am äußeren Rahmenprofil 17 vorgesehene Nut 25 lagesicher positioniert werden kann. Mit Hilfe der inneren und äußeren Dichtleisten 1, 22 kann die Glasscheibe 19, 20 lagesicher in dem Rahmen fixiert werden.

Die in der Fig. 2A dargestellte Glasscheibe 19 weist eine Dicke von $d_{GS1}$ auf. Die in der Fig. 2B abgebildete Glasscheibe 20 weist eine Dicke von $d_{GS2}$ auf, wobei im dargestellten und insoweit bevorzugten Ausführungsbeispiel die Dicke $d_{GS2}$ der Glasscheibe 20 geringer ist als die Dicke $d_{GS1}$ der Glasscheibe 19. Zum Ausgleich dieser Differenz kann die Dichtleiste 1 in zwei Varianten in dem Rahmen montiert werden.

Bei der vergleichsweise dicken Glasscheibe 19 mit der Dicke $d_{GS1}$ ist die Dichtleiste 1 so montiert, dass der Hauptabschnitt 2 und der Adapterabschnitt 3 der Dichtleiste 1 lediglich über die erste Verbindung miteinander verbunden sind. Die zweite Verbindung zwischen dem Hauptabschnitt 2 und dem Adapterabschnitt 3 der Dichtleiste 1 ist hier getrennt. In diesem Fall weist die Dichtleiste 1 im eingebauten Zustand eine Dichtstoffdicke $dd_{get}$ auf.

Bei der vergleichsweise dünneren Glasscheibe 20 mit der Dicke $d_{GS2}$ ist die Dichtleiste 1 jeweils so montiert, dass der Hauptabschnitt 2 und der Adapterabschnitt 3 der Dichtleiste 1 alternativ oder zusätzlich zur ersten Verbindung über die zweite Verbindung miteinander verbunden sind. In diesem Fall weist die Dichtleiste 1 im eingebauten Zustand eine Dichtstoffdicke $dd_{geb}$ auf. Hierzu ist der Pilzkopf 6 des Adapterabschnittes 3 in der Aufnahmenut 7 des Hauptabschnitts 2 angeordnet. Durch die unterschiedlichen Dichtstoffdicken $dd_{get}$, $dd_{geb}$ kann die Differenz zwischen den Dicken $d_{GS1}$, $d_{GS2}$ der Glasscheiben 19, 20 ausgeglichen werden.

Im dargestellten und insoweit bevorzugten Ausführungsbeispiel lässt sich die Dichtstoffdicke $dd_{get}$, $dd_{geb}$ der Dichtleiste 1 lediglich bei der inneren Dichtleiste 1 und nicht bei der äußeren Dichtleiste 22 anpassen. Alternativ oder zusätzlich kann auch als äußere Dichtleiste eine erfindungsgemäße Dichtleiste zum Einsatz kommen, bei der sich die Dichstoffdicke in der zuvor beschriebenen Art und Weise modifizieren lässt.

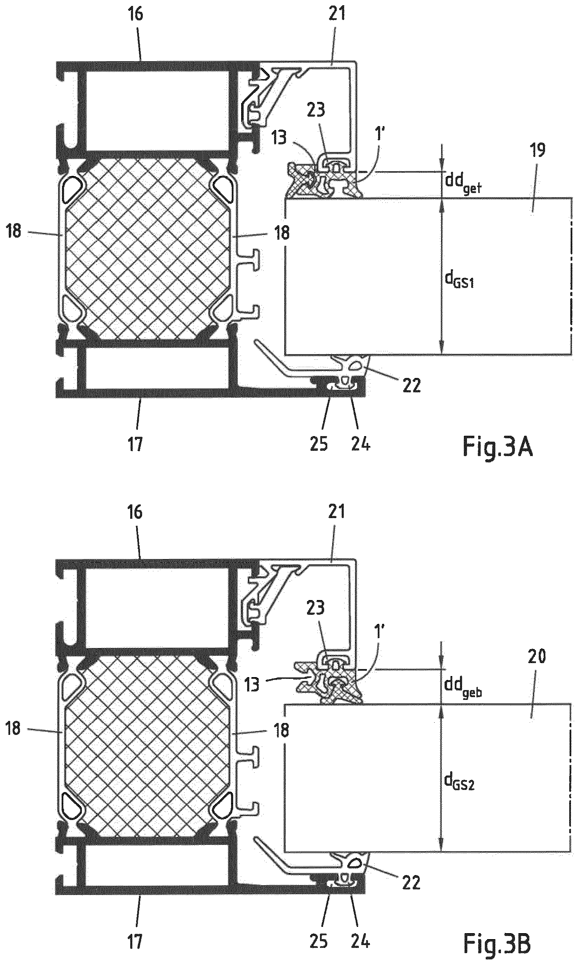

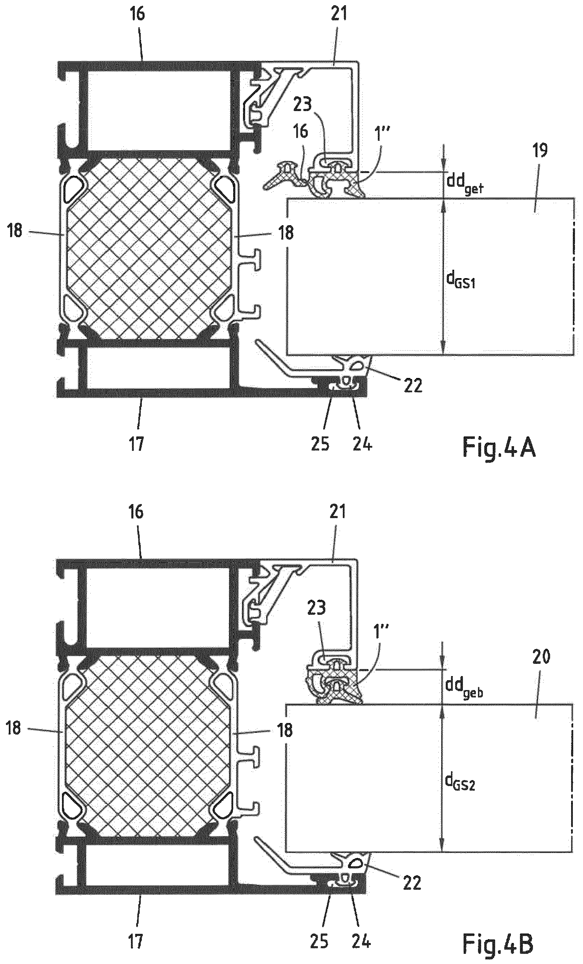

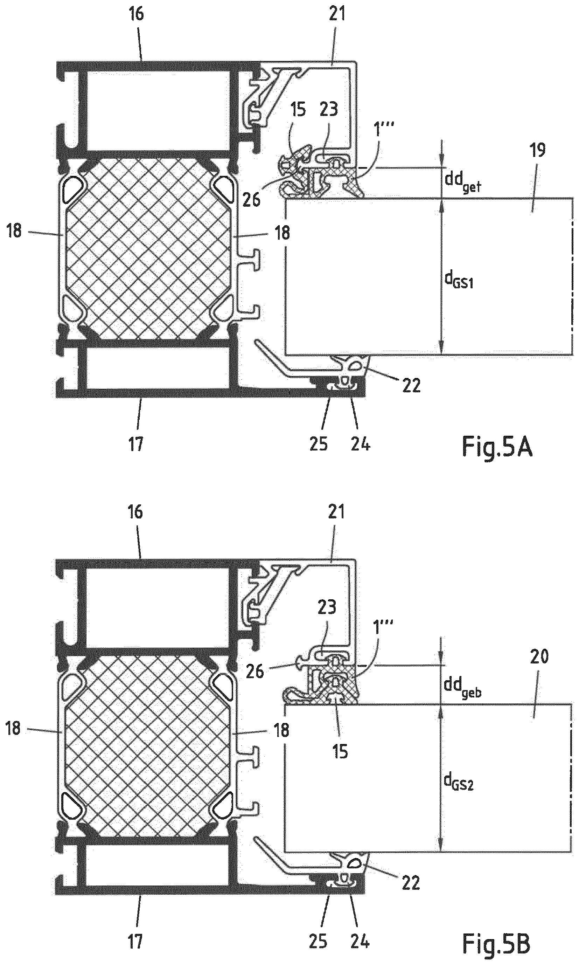

Die voranstehenden Erläuterungen zum ersten Ausführungsbeispiel sind ebenfalls für das zweite, in den Fig. 3A und 3B gezeigte Ausführungsbeispiel, das dritte, in den Fig. 4A und 4B dargestellte Ausführungsbeispiel sowie das vierte, in den Fig. 5A und 5B gezeigte Ausführungsbeispiel gültig. Die Ausführungsbeispiele unterscheiden sich insbesondere dahingehend, wie die Anpassung der Dichtstoffdicke $dd_{get}$, $dd_{geb}$ der Dichtleiste 1, 1', 1", 1‴ erfolgt. Nachstehend wird daher maßgeblich darauf eingegangen, wie die Dichtstoffdicke $dd_{get}$, $dd_{geb}$

der Dichtleiste 1, 1', 1", 1''' bei den einzelnen Ausführungsbeispielen modifiziert wird.

Beim ersten, in den Fig. 2A und 2B dargestellten Ausführungsbeispiel kann die Dichtstoffdicke $dd_{get}$, $dd_{geb}$ der Dichtleiste 1 durch Umfalten des Adapterabschnittes 3 angepasst werden. Die zweite Verbindung zwischen Hauptabschnitt 2 und Adapterabschnitt 3 wird durch Positionierung des am Adapterabschnitt 3 ausgebildeten Pilzkopfes 6 in die Aufnahmenut 7 des Hauptabschnitts 2 gebildet, ohne dass die erste Verbindung zwischen Hauptabschnitt 2 und Adapterabschnitt 3 getrennt werden muss.

Beim zweiten, in den Fig. 3A und 3B dargestellten Ausführungsbeispiel erfolgt die Anpassung der Dichtstoffdicke $dd_{get}$ auf die Dichtstoffdicke $dd_{geb}$, indem der Adapterabschnitt 3' aus der an der Seite des Hauptabschnitts 2' angeordneten Aufnahmenut 13 herausgezogen wird und in die der Glasscheibe 19, 20 zugeordnete Aufnahmenut 7 positioniert wird.

Beim dritten, in den Fig. 4A und 4B dargestellten Ausführungsbeispiel muss der Abreißsteg 14 zerstört werden, um die zweite Verbindung bilden zu können. Die zweite Verbindung wird in Analogie zu dem ersten und zweiten Ausführungsbeispiel realisiert, indem der am Adapterabschnitt 3" ausgebildete Pilzkopf 6" in die Aufnahmenut 7 platziert wird.

Beim vierten, in den Fig. 5A und 5B dargestellten Ausführungsbeispiel wird die die Dichtstoffdicke $dd_{get}$, $dd_{geb}$ ähnlich zum ersten Ausführungsbeispiel angepasst. Der Hauptabschnitt 2''' und der Adapterabschnitt 3''' sind über das Gelenk 4' beweglich miteinander verbunden. Die erste Verbindung ist beim vierten Ausführungsbeispiel also immer gebildet. Die zweite Verbindung wird durch Umklappen des Adapterabschnittes 3''' und Positionierung des am Adapterabschnitt 3''' ausgebildeten Pilzkopfes 6''' in die Aufnahmenut 7 am Hauptabschnitt 2''' gebildet. In diesem Zustand weist die Dichtleiste 1''' die Dichtstoffdicke $dd_{geb}$ auf. Im Gegensatz zum ersten Ausführungsbeispiel wird der Adapterabschnitt 3''' bei diesem Ausführungsbeispiel auch bei getrennter zweiter Verbindung lagesicher positioniert, indem die an dem Adapterabschnitt 3''' ausgebildete Nut 15 mit einem an der Glasleiste 21 vorgesehenen Pilzkopf 26 in Eingriff gebracht werden kann. Der Adapterabschnitt 3''' muss von diesem abgezogen werden, um die zweite Verbindung bilden zu können.

## Patentansprüche

1.  Dichtleiste für einen aus einzelnen Rahmenprofilen (16, 17) zusammengesetzten Rahmen eines Fensters, einer Tür oder einer Fassade zur Anordnung zwischen einer Scheibe, insbesondere einer Glasscheibe (19, 20), und einer Glasleiste (21) oder zur Anordnung zwischen der Scheibe, insbesondere der Glasscheibe (19, 20), und dem Rahmenprofil (17), wobei die Dichtleiste (1, 1', 1", 1''') im Querschnitt einen Hauptabschnitt (2, 2', 2", 2''') und einen Adapterabschnitt (3, 3', 3", 3''') umfasst und wobei der Hauptabschnitt (2, 2', 2", 2''') und der Adapterabschnitt (3, 3', 3", 3''') zumindest im Ausgangszustand über eine erste Verbindung miteinander verbunden sind,
    **dadurch gekennzeichnet, dass** der Hauptabschnitt (2, 2', 2", 2''') und der Adapterabschnitt (3, 3', 3", 3''') alternativ oder zusätzlich zur ersten Verbindung über eine zweite Verbindung miteinander verbindbar sind, wobei eine Dichtstoffdicke der Dichtleiste (1, 1', 1", 1''') durch Bildung der zweiten Verbindung veränderbar ist.

2.  Dichtleiste nach Anspruch 1,
    **dadurch gekennzeichnet, dass**
    die erste Verbindung als Gelenk (4, 4') ausgebildet ist.

3.  Dichtleiste nach Anspruch 1,
    **dadurch gekennzeichnet, dass**
    die erste Verbindung als Abreißsteg (14) ausgebildet ist.

4.  Dichtleiste nach einem der voranstehenden Ansprüche,
    **dadurch gekennzeichnet, dass**
    der Hauptabschnitt (2, 2", 2''') und der Adapterabschnitt (3, 3", 3''') zumindest im Ausgangszustand einstückig ausgebildet sind.

5.  Dichtleiste nach Anspruch 1,
    **dadurch gekennzeichnet, dass**
    die erste Verbindung als formschlüssige Verbindung ausgebildet ist.

6.  Dichtleiste nach einem der voranstehenden Ansprüche,
    **dadurch gekennzeichnet, dass**
    die zweite Verbindung als formschlüssige Verbindung ausgebildet ist.

7.  Dichtleiste nach Anspruch 5 und 6,
    **dadurch gekennzeichnet, dass**
    ein an dem Adapterabschnitt (3') ausgebildeter Pilzkopf (6') sowohl zur Bildung der ersten als auch der zweiten Verbindung ausgebildet ist.

8.  Dichtleiste nach Anspruch 6 oder 7,
    **dadurch gekennzeichnet, dass**
    zur Bildung der zweiten Verbindung eine an dem Hauptabschnitt (2, 2', 2", 2''') ausgebildete, im Ausgangszustand offene Aufnahmenut (7) vorgesehen ist.

9.  Dichtleiste nach einem der voranstehenden Ansprüche,

**dadurch gekennzeichnet, dass**
für das Verhältnis aus der Dichtstoffdicke der Dichtleiste (1, 1', 1", 1''') bei gebildeter zweiter Verbindung $dd_{geb}$ und der Dichtstoffdicke der Dichtleiste (1, 1', 1", 1''') bei getrennter zweiter Verbindung $dd_{get}$ folgender Zusammenhang gilt:

$$1{,}1 \leq \frac{dd_{geb}}{dd_{get}} \leq 1{,}5$$

10. Dichtleiste nach Anspruch 9,
**dadurch gekennzeichnet, dass**
für das Verhältnis aus der Dichtstoffdicke der Dichtleiste (1, 1', 1", 1''') bei gebildeter zweiter Verbindung $dd_{geb}$ und der Dichtstoffdicke der Dichtleiste (1, 1', 1", 1''') bei getrennter zweiter Verbindung $dd_{get}$ folgender Zusammenhang gilt:

$$1{,}2 \leq \frac{dd_{geb}}{dd_{get}} \leq 1{,}4$$

11. Dichtleiste nach einem der voranstehenden Ansprüche,
**dadurch gekennzeichnet, dass**
an dem Hauptabschnitt (2, 2', 2", 2''') ein zusätzliches Verbindungselement (12) zur Verbindung mit der Glasleiste (21) oder mit dem Rahmenprofil vorgesehen ist.

12. Dichtleiste nach einem der voranstehenden Ansprüche,
**dadurch gekennzeichnet, dass**
an dem Adapterabschnitt (3''') ein zusätzliches Verbindungselement (15) zur Verbindung mit der Glasleiste (21) oder dem Rahmenprofil vorgesehen ist.

Fig.1A

Fig.1B

Fig.1C

Fig.1D

Fig.2A

Fig.2B

16   21

13   23   1'

18      18

17      25   24

$dd_{get}$

$d_{GS1}$

19

Fig.3A

16   21

23   1'

13

18      18

17      25   24

$dd_{geb}$

$d_{GS2}$

20

22

Fig.3B

Fig.4A

Fig.4B

Fig.5A

Fig.5B

**EP 4 215 709 A1**

Europäisches
Patentamt
European
Patent Office
Office européen
des brevets

**EUROPÄISCHER RECHERCHENBERICHT**

Nummer der Anmeldung

**EP 23 15 2262**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 20 2010 015534 U1 (GUTMANN AG [DE]) 1. März 2012 (2012-03-01) * Abbildungen 1B, 2E * ----- | 1,3-11 | INV. E06B3/16 E06B3/263 E06B3/58 |
| X | DE 295 03 194 U1 (EBERSPAECHER J [DE]) 20. April 1995 (1995-04-20) * Abbildungen 1, 2 * ----- | 1,2,4,6, 9,10,12 | E06B3/62 E06B7/23 F16J15/00 |
| X | DE 44 05 139 A1 (WEIKERT DIETRICH [DE]) 29. September 1994 (1994-09-29) * Abbildungen 5-7 * ----- | 1,2,4, 9-11 | |

RECHERCHIERTE SACHGEBIETE (IPC)

**E06B**
**F16J**

Der vorliegende Recherchenbericht wurde für alle Patentansprüche erstellt

| Recherchenort | Abschlußdatum der Recherche | Prüfer |
|---|---|---|
| **Den Haag** | **19. Mai 2023** | **Crespo Vallejo, D** |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

14

**ANHANG ZUM EUROPÄISCHEN RECHERCHENBERICHT
ÜBER DIE EUROPÄISCHE PATENTANMELDUNG NR.**

EP 23 15 2262

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-05-2023

| Im Recherchenbericht angeführtes Patentdokument | Datum der Veröffentlichung | Mitglied(er) der Patentfamilie | Datum der Veröffentlichung |
|---|---|---|---|
| DE 202010015534 U1 | 01-03-2012 | DE 202010015534 U1<br>EP 2455559 A2 | 01-03-2012<br>23-05-2012 |
| DE 29503194 U1 | 20-04-1995 | DE 29503194 U1<br>EP 0728901 A2 | 20-04-1995<br>28-08-1996 |
| DE 4405139 A1 | 29-09-1994 | KEINE | |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202010015534 U1

- DE 202005000604 U1